# EUROPEAN PATENT APPLICATION

(11) **EP 4 572 463 A1**
(43) Date of publication of application: **18.06.2025**
(21) Application number: 23851835.1
(22) Date of filing: 08.08.2023
(51) Int. Cl.: H04W 72/04

(54) **BEAM MANAGEMENT METHOD, BEAM CONFIGURATION METHOD, ACCESS NODE, AND RELAY DEVICE**

(30) Priority: 12.08.2022 CN 202210969791
(71) Applicant: ZTE Corporation, Shenzhen, Guangdong 518057 (CN)
(72) Inventor: DAI, Qian, Shenzhen, Guangdong 518057 (CN); LI, Ping, Shenzhen, Guangdong 518057 (CN); DOU, Jianwu, Shenzhen, Guangdong 518057 (CN)
(74) Representative: Ziebig Hengelhaupt Intellectual Property Attorneys Patentanwaltskanzlei PartGmbB
(86) International application number: PCT/CN2023/111755
(87) International publication number: WO 2024/032614

(57) **Abstract**

Provided in the embodiments of the present application are a beam management method, a beam configuration method, an access node, a relay device, and a storage medium. The beam management method comprises: grouping a plurality of relay devices according to a preset grouping rule, and forming at least one beam management group (S1000); and performing, with each group as a unit, beam management on the relay devices in each beam management group (S2000).

## Description

### CROSS-REFERENCE TO RELATED APPLICATIONS

The present application is proposed based on and claims the priority of the Chinese patent application with the application No. 202210969791.3 filed on August 12, 2022, the entire contents of which are incorporated herein by reference.

### TECHNICAL FIELD

Embodiments of the present application relate to the technical field of communications, in particular to a beam management method, a beam configuration method, a base station, a relay device, and a storage medium.

### BACKGROUND

In some cases, in order to compensate for a path loss of a wireless signal, a relay device is usually arranged to forward the wireless signal, so as to improve the signal transmission distance and ensure the communication quality.

Taking millimeter wave communication as an example, a millimeter wave base station usually adopts a large-scale antenna array for narrow-beam transmission, which may effectively concentrate transmission energy in a certain area or direction. However, millimeter wave directional transmission is very sensitive to blocking and may even lead to a disconnection. Therefore, a reconfigurable intelligent surface is integrated into a millimeter wave cellular system to take advantage of its characteristic of being capable of actively correcting a wireless channel through a controlled intelligent signal reflection technology, thus improving the communication quality and a coverage capability of the millimeter wave system. However, in some special application scenarios, a plurality of reconfigurable intelligent surfaces need to be deployed within a coverage range of a base station, and the base station needs to perform beam management on the plurality of reconfigurable intelligent surfaces one by one, resulting in low beam management efficiency and affecting the communication quality.

### SUMMARY

Embodiments of the present application provide a beam management method, a beam configuration method, a base station, a relay device, and a storage medium.

In a first aspect, an embodiment of the present application provides a beam management method, including: grouping a plurality of relay devices according to a preset grouping rule, and forming at least one beam management group; and performing, with each group as a unit, beam management on the relay devices in each beam management group.

In a second aspect, an embodiment of the present application provides a beam configuration method, including: receiving beam management group signaling sent by a second access node, wherein the beam management group signaling is used to perform, with a group as a unit, beam management on a plurality of relay devices in a beam management group; obtaining a corresponding beam management codebook according to the beam management group signaling; and performing beam configuration according to the beam management codebook.

In a third aspect, an embodiment of the present application provides a beam management method, including: receiving second beam management group information sent by a second access node; and generating an acceptance judgment on a second beam management group according to the second beam management group information, and sending acceptance feedback information for the second beam management group to the second access node.

In a fourth aspect, an embodiment of the present application provides an access node, including: at least one processor; and at least one memory, configured to store at least one program; and the at least one program executes, when run by the at least one processor, the beam management method according to any one of the first aspect and third aspect.

In a fifth aspect, an embodiment of the present application provides a relay device, including: at least one processor; and at least one memory, configured to store at least one program; and the at least one program executes, when run by the at least one processor, the beam configuration method according to any one of the second aspect.

In a sixth aspect, an embodiment of the present application provides a computer readable storage medium, storing a processor executable program therein; the processor executable program executes, when run by a processor, the beam management method according to any one of the first aspect and third aspect, or, the beam configuration method according to any one of the second aspect.

### BRIEF DESCRIPTION OF DRAWING(S)

FIG. 1 is a schematic diagram of a relay communication system provided by an embodiment of the present application.
FIG. 2 is a flowchart of a beam management method provided by an embodiment of the present application.
FIG. 3 is a flowchart of a beam management method in a base station switching scenario provided by an embodiment of the present application.
FIG. 4 is a flowchart of a beam management method provided by an embodiment of the present application.
FIG. 5 is a flowchart of a beam management method provided by an embodiment of the present application.
FIG. 6 is a flowchart of a beam configuration method provided by an embodiment of the present application.
FIG. 7 is a schematic diagram of realizing signal coverage utilizing a reconfigurable intelligent surface in a high-speed rail scenario provided by an example of the present application.
FIG. 8 is a schematic flowchart of a beam management method provided by an example of the present application.
FIG. 9 is a schematic flowchart of a beam management method provided by an example of the present application.
FIG. 10 is a schematic flowchart of a beam management method provided by an example of the present application.
FIG. 11 is a schematic diagram of beam management in a base station switching process in a high-speed rail scenario provided by an example of the present application.
FIG. 12 is a flowchart of beam management in a base station switching process provided by an example of the present application.
FIG. 13 is a schematic structural diagram of a base station provided by an embodiment of the present application.
FIG. 14 is a schematic structural diagram of a relay device provided by an embodiment of the present application.

### DETAILED DESCRIPTION

In order to make objectives, technical solutions and advantages of the present application more clear and understandable, the present application is further illustrated in detail below in conjunction with accompanying drawings and embodiments. It should be understood that the embodiments described herein are only used to explain the present application and are not used to limit the present application.

It needs to be noted that although the division of functional modules is made in a schematic diagram of an apparatus and a logical sequence is shown in a flowchart, in some cases, steps shown or described may be executed differently from the division of modules in the apparatus or the sequence in the flowchart. Terms "first", "second" and the like in the specification, claims and the above accompanying drawings are used to distinguish similar objects, and need not be used to describe a specific order or sequence.

In the embodiments of the present application, words such as "further", "exemplarily", or "optionally" are used to represent examples, illustrations, or descriptions, and should not be construed as preferred or advantageous over other embodiments or design solutions. The use of the words such as "further", "exemplarily" or "optionally" is intended to present relevant concepts in a concrete manner.

With the explosive growth of data traffic, a millimeter wave (mmWave) has become a key technology for a 5th generation (5G) system with its abundant available frequency bands. A first serious challenge in realizing mmWave communications is a path loss. To compensate for the severe path loss of mmWave transmission, an mmWave base station (BS) usually adopts a large-scale antenna array for narrow-beam transmission, which may effectively concentrate transmission energy in a certain area or direction. However, mmWave directional transmission is very sensitive to blocking and may even lead to a disconnection, and this also brings a new challenge to the establishment and maintenance of an mmWave link. For this, a reconfigurable intelligent surface (RIS) and a network controlled repeater (NCR) are integrated into an mmWave cellular system.

The RIS/NCR is an antenna surface containing a large number of low-cost passive reflection arrays, and each array can independently adjust a phase and amplitude of an incident electromagnetic wave, thus changing a propagation path of the electromagnetic wave. In some cases, a wireless technology generally performs signal processing at a transceiving end to adapt to a dynamic and uncontrollable wireless environment, whereas the RIS/NCR can actively correct a wireless channel through a controllable intelligent signal reflection technology. Thus, the RIS/NCR provides a new degree of freedom for further improvement of a wireless link performance and provides a possibility of realizing an intelligent programmable wireless environment. In the mmWave cellular system, a blocking problem will severely reduce the communication quality and even cause a link interruption. The RIS/NCR, with its capability to change the electromagnetic wave transmission environment, has potential to be a new method to deal with the blocking problem of mmWave communications. For a user whose link to the base station is blocked, the transmission path of the electromagnetic wave can bypass an obstruction to reach the user through a phase adjustment of the RIS/NCR, thus improving the communication quality and the coverage capability of the mmWave system.

In a deployment manner of the RIS/NCR, one or more dedicated RISs/NCRs are usually deployed within a coverage range of a single base station, which is used to improve a signal of a coverage blind spot within the coverage area of this base station. In some special scenarios, such as a high-speed rail and a building, transmissive RIS/NCRs need to be deployed in vehicle windows and building windows to relay beams of a base station into carriages and indoor spaces. In order to ensure that the beams accurately cover users in the carriages and the indoor spaces, the base station is required to adjust reflection arrays of the RIS/NCRs dynamically in real time according to a beam tracking results, and adjustment indications of all the reflection arrays of the whole array constitutes an adjustment indication matrix (in the present application, the adjustment indication matrix is referred to as a beam management codebook). Different adjustment indication matrices may realize adjustments of characteristics such as the number (e.g., single-beam reflection and multiple-beam reflection), direction, and outgoing manner (e.g., reflection, diffusion, transmission) of outgoing beams, a lobe width of the beams, and a beam amplitude, whereas in such scenarios, one base station usually needs to control a large number of RIS/NCRs. In order to ensure high traffic services, high-frequency coverage has been supported by 5G, whereas high-frequency service beams of the base station are usually narrow beams, which need to cover interiors of the carriages and rooms in turn via relaying of each RIS/NCR. Whereas, if a beam relay configuration adjustment is performed on each RIS/NCR in turn, the larger the number of RIS/NCRs, the larger a time interval of the beam relay configuration adjustment for each RIS/NCR will be, which may result in a non-timely beam relay adjustment and thus affect the coverage performance.

On such basis, the present application provides a beam management method, a beam configuration method, a base station, a relay device, and a storage medium. In the beam management method, a plurality of relay devices are grouped according to a preset grouping rule, and beam management groups are formed. With each group as a unit, beam management is performed on the relay devices in each beam management group, thus improving the beam management efficiency and ensuring the communication quality.

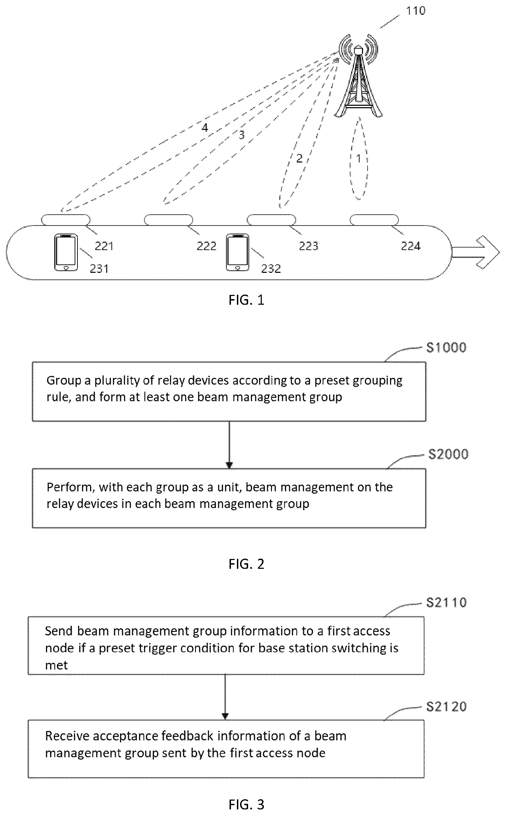

FIG. 1 is a schematic diagram of a relay communication system provided by an embodiment of the present application. The relay communication system 100 includes an access node 110, relay devices 221-224, and terminals 231-232. As can be seen in the figure, in an application scenario of a high-speed rail, a signal inside the high-speed rail is poor due to blockage of a carriage, and at this time, it is necessary to forward the signal with the help of the relay devices 221-224, so as to realize communications between the terminals 231-232 and the access node 110.

A technical solution of the embodiment of the present application may be applied to various communication systems, such as: wideband code division multiple access (WCDMA), an evolved universal terrestrial radio access network (E-UTRAN) system, a next generation radio access network (NG-RAN) system, a long term evolution (LTE) system, a worldwide interoperability for microwave access (WiMAX) communication system, a 5th generation (5G) system, e.g., a new radio access technology (NR), and a future communication system, e.g., a 6G system.

The technical solution of the embodiment of the present application may be applied to various communication technologies, such as microwave communications, optical wave communications, and mmWave communications. A specific technology and specific device form adopted are not limited by the embodiment of the present application.

The access node 110 of the embodiment of the present application may be an evolved NodeB (eNB), a transmission reception point (TRP), a next generation NodeB (gNB) in an NR system, a base station in other future mobile communication systems, or an access node in a wireless fidelity (WiFi) system, etc. A specific technology and specific device form adopted for a network device is not limited by the embodiment of the present disclosure.

The terminals 231-232 in the embodiment of the present disclosure are entities on a user side and configured to receive or transmit signals, such as mobile phones. A terminal device may also be called a terminal, user equipment (UE), a mobile station (MS), a mobile terminal (MT), etc. The terminal device may be a car with a communication function, a smart car, a mobile phone, a wearable device, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, etc. A specific technology and specific device form adopted for the terminals are not limited by the embodiment of the present disclosure.

The relay devices 121-122 of the embodiment of the present application may be any network device having a wireless signal relay capability, i.e., having a capability to receive a wireless signal and wirelessly forward the wireless signal. The relay devices may be repeaters, reconfigurable intelligent surfaces (RISs), network controlled repeaters (NCRs), etc. A specific technology and specific device form adopted for the relay devices are not limited by the embodiment of the present disclosure.

In the embodiment provided by the present application, the base station as the access node is taken as an example for illustration. However, those skilled in the art may understand that other types of access nodes such as a TRP and a gNB are also suitable for the beam management method provided by the embodiment of the present application.

FIG. 2 is a flowchart of a beam management method provided by an embodiment of the present application. As shown in FIG. 2, the beam management method may include, but is not limited to, step S1000 and step S2000.

At step S1000, a plurality of relay devices are grouped according to a preset grouping rule, and at least one beam management group is formed.

In some embodiments, a beam management group building message is sent to the plurality of relay devices by a base station, so that the plurality of relay devices form the beam management group according to the beam management group building message; wherein the beam management group building message carries beam management group information.

It needs to be noted that in a stage of forming the beam management group, the beam management group information at least includes one of the following: an identifier of a beam management group; the transmission type of the serial number of a beam management codebook; an identifier of a reference relay device; an identifier of a common relay device; or a relative positional relation between a reference relay device and a common relay device.

It may be understood that since one base station may manage a plurality of beam management groups, or the beam management groups where part of the relay devices are located changes when facing base station switching, the identifier of the beam management group is needed to differentiate different beam management groups. The transmission type of the serial number of the beam management codebook is used to represent whether to adopt a compression code of the serial number of the beam management codebook. Since in some embodiments, the relay devices in the beam management groups are divided into two types, one type is reference relay devices, and these reference relay devices are also referred to as reference point relay devices, and the other type is common relay devices other than the reference relay devices. The identifier of the relay device and the identifier of the common relay device are adopted to differentiate different relay device types and different relay devices. After the reference relay device is determined, other common relay devices in the group all determine the relative positional relation based on the reference relay device.

In some embodiments, the preset grouping rule, and work information of and the plurality of relay devices are acquired, the relay device corresponding to work information which meets the preset grouping rule is determined as a target relay device, and the beam management group is determined according to the target relay device.

It needs to be noted that the preset grouping rule at least includes one of the following: the relative position between the plurality of access relay devices which are accessed is fixed; the beam management frequency difference between the plurality of relay devices which are accessed is less than a preset frequency difference threshold; the plurality of relay devices which are accessed have the same movement speed and movement direction; or the number of the relay devices which are accessed is less than a preset number threshold of members of the beam management group..

In some embodiments, when the preset grouping rule is that the relative position between the plurality of access relay devices is fixed, for example, relay devices are arranged at windows of a building, then both the relative positions and absolute positions of these relay devices are all fixed. If relay devices are arranged at windows of a high-speed rail, the relative positions of these relay devices are fixed and not affected by movement of the high-speed rail. When the relative positional relation between the plurality of relay devices meets the grouping rule provided by this embodiment, these relay devices whose relative positions are definite may be grouped into one or more groups, and one or more beam management groups are formed.

In some embodiments, when the preset grouping rule is that the beam management frequency difference between the plurality of access relay devices is less than the preset frequency difference threshold, then the plurality of relay devices that meet this grouping rule have beam management frequencies relatively close to each other, and it is more suitable to manage these relay devices in a uniform way.

In some embodiments, when the preset grouping rule is that the plurality of access relay devices have the same movement speed and movement direction, then the plurality of relay devices that meet this grouping rule are in a relatively stationary state, and the relative positions therebetween are fixed. When the relative positional relation between the plurality of relay devices meets the grouping rule provided by this embodiment, these relay devices whose relative positions are definite may be grouped into one or more groups, and one or more beam management groups are formed.

In some embodiments, when the preset grouping rule is that the number of the access relay devices is less than the preset number threshold of the members of the beam management group, in a scenario, the threshold is set in advance for the number of the members in the beam management group, and only when the number threshold is not exceeded, the relay devices are assigned to the beam management group for beam management.

It needs to be noted that the above preset grouping conditions may be in a form of a combination, for example, in some embodiments, the plurality of relay devices need to simultaneously meet the two preset grouping conditions that the relative position is fixed and the beam management frequency difference is less than the preset frequency difference threshold, then beam management is performed on these relay devices.

It needs to be noted that the work information of the relay devices is acquired in various manners, including at least one of the following: the base station measures positioning of the relay devices, and obtains the work information according to the positioning; the base station directly acquires the work information from the relay devices; the base station acquires the work information of the relay devices from a management server of the relay devices; or the current base station acquires the work information of the relay devices from a second base station.

In some embodiments, the base station measures positions of the relay devices, and obtains the work information of the relay devices from the positions. The work information at least includes one of the following: position information, a movement speed, and a relative positional relation between the relay devices in the beam management group.

In some embodiments, the base station acquires the work information from the relay devices. The work information at least includes one of the following: position information, a movement speed, and a determination result of relative positional fixity of the relay devices relative to an adjacent relay device. It needs to be noted that the determination result of the relative positional fixity of the relay device relative to the adjacent relay device refers to whether the relative position of the relay device is fixed relative to the adjacent relay device, i.e., there are two possibilities for the determination result, one is that the relative position is fixed, and the other is that the relative position is not fixed.

In some embodiments, the base station acquires the work information of the relay devices from the management server of the relay devices. The work information at least includes one of the following: a movement speed, an identifier of the relay devices in the beam management group, a determination result of relative positional fixity between the relay devices in the beam management group, a relative positional relation between the relay devices in the beam management group, or beam configuration information of the relay devices in the beam management group.

It needs to be noted that the beam configuration information at least includes one of the following: a horizontal outgoing angle of an outgoing beam relative to the relay device; a vertical outgoing angle of the outgoing beam relative to the relay device; a horizontal outgoing width of the outgoing beam; a vertical outgoing width of the outgoing beam; the spacing between the relay device and an outgoing beam coverage point; or the coverage area of the outgoing beam coverage point.

In some embodiments, the current base station acquires the work information of the relay devices from a second base station. The work information at least includes one of the following: a movement speed, an identifier of a relay device in a to-be-switched beam management group, and a relative positional relation between the relay devices in the to-be-switched beam management group, wherein the to-be-switched beam management group is a beam management group corresponding to a to-be-switched base station. It needs to be noted that when the relay devices move, it may be necessary to switch from the current base station to the second base station for beam management, therefore, the work information of the relay devices may be acquired from the second base station, and the beam management group that will be managed by the second base station is the to-be-switched beam management group.

It needs to be noted that in some embodiments, the relay devices in the beam management group are divided into two types, one type is a reference relay device, and the other type is a common relay device other than the reference relay device. Therefore, in the above embodiment, the relative positional relation at least includes one of the following: the linear spacing between the reference relay device and the common relay device, the linear spacing between adjacent relay devices, the horizontal spacing between the reference relay device and the common relay device and the height difference between the reference relay device and the common relay device, the horizontal spacing between the adjacent relay devices and the height difference between the adjacent relay devices, the included angle between the reference relay device and the common relay device in the horizontal plane direction and the included angle between the reference relay device and the common relay device in the vertical plane direction, or the included angle between the adjacent relay devices in the horizontal plane direction and the included angle between the adjacent relay devices in the vertical plane direction.

At step S2000: with each group as a unit, beam management is performed on the relay devices in each beam management group.

In some embodiments, the base station realizes the beam management on the relay devices in the beam management group by generating at least one beam management group signaling and sending the beam management group signaling to the beam management group.

In some embodiments, if the base station needs to update management information of the relay devices in the beam management group, the beam management group signaling includes a beam management update message, and the beam management update message carries updated beam management group information. The base station realizes update of the beam management of the beam management group by sending the beam management update message to the beam management group.

In some embodiments, the base station configures a corresponding beam management codebook for each relay device in the beam management group, generates beam management group signaling according to all the beam management codebooks, and finally sends the beam management group signaling to all the relay devices in the corresponding beam management group simultaneously. After receiving the corresponding beam management group signaling, each relay device parses and obtains its own corresponding beam management codebook, and performs beam configuration according to the beam management codebook.

In another embodiment, the base station configures a corresponding beam management codebook for each relay device in the beam management group, generates beam management group signaling according to all the beam management codebooks, and finally sends the beam management group signaling to one relay device in the beam management group first. This relay device may be a reference point relay device used as the reference relay device, the reference relay device then parses the beam management codebooks corresponding to itself and other common relay devices, and then sends the beam management codebooks of the other common relay devices to the corresponding relay devices, so that all the relay devices in the group can obtain the corresponding beam management codebooks, and beam configuration is realized.

It needs to be noted that when the base station configures the beam management codebooks for all the relay devices in the beam management group, the beam management group information at least includes one of the following: an identifier of the beam management group, an identifier of the base station, the serial number of the beam management codebook of each relay device in the beam management group, a compression code of the serial number of the beam management codebook of each relay device in the beam management group, the update sequence of the beam management codebook of each relay device in the beam management group, or an update time offset of the beam management codebook of each relay device in the beam management group.

In some embodiments, the base station configures a corresponding beam management codebook for the reference relay device in the beam management group. At the same time, the base station acquires the relative positional relation between the reference relay device and the common relay devices, generates the beam management group signaling according to the beam management codebook and the relative positional relation between the reference relay device and the common relay devices, and finally sends the beam management group signaling to all the relay devices in the corresponding beam management group simultaneously. It needs to be noted that the difference between this embodiment and the above two embodiments is that in this embodiment, the base station only configures the beam management codebook of the reference relay device, and at the same time issues the relative positional relation between each common relay device and the reference relay device, so that the common relay device derives its own corresponding beam management codebook according to the relative positional relation and the beam management codebook of the reference relay device. At the same time, the common relay device, after deriving the beam management codebook on its own, may carry the self-derived beam management codebook in device feedback information and send it to the base station, so that the base station can verify correctness of the beam management codebook generated by the common relay device on its own.

It needs to be noted that when the base station configures the beam management codebook for the reference relay device in the beam management group, the beam management group information at least includes one of the following: an identifier of the beam management group, an identifier of the base station, the serial number of a beam management codebook of the reference relay device in the beam management group, a relative positional relation between the reference relay device and the common relay devices in the beam management group, an update sequence of a beam management codebook of each common relay device in the beam management group, or an update time offset of the beam management codebook of each common relay device in the beam management group.

By the beam management method provided by the embodiment of the present application, the beam management efficiency of the base station for the reconfigurable intelligent surface can be improved, the communication quality is ensured, and the user experience is improved.

FIG. 3 is a flowchart of a beam management method in a base station switching scenario provided by an embodiment of the present application. As shown in FIG. 3, the beam management method may include, but is not limited to, step S2110 to step S2120.

When a beam management group moves from the coverage range of one base station to the coverage range of another station, the beam management group needs to be switched from one base station to the other base station, and transfer of beam management group information is involved between the two base stations.

In some embodiments, whether base station switching is needed is judged by presetting a trigger condition for base station switching. It needs to be noted that judging whether base station switching is needed is judging whether base station switching is triggered, because in different embodiments, conditions for base station switching may be different.

At step S2110: beam management group information is sent to a first access node if a preset trigger condition for access node switching is met.

It needs to be noted that the first access node in this embodiment is a first base station.

It needs to be noted that the embodiment of the present application provides two trigger conditions for base station switching, the first is that at least one relay device in the beam management group meets a base station switching condition; and the second is that within a preset time window, change of position information of the relay devices in the beam management group meets the base station switching condition.

In some embodiments, the beam management group information is sent to the first base station if the preset trigger condition for base station switching is met, wherein the first base station is a base station that is going to take over the beam management group.

It needs to be noted that the beam management group information at least includes an identifier of each relay device in the beam management group.

At step S2120: acceptance feedback information of the beam management group sent by the first access node is received.

In some embodiments, the first base station will judge whether takeover of the beam management group is possible, updates configuration of the beam management group according to the takeover situation, and send updated updated beam management group configuration to the current base station by carrying the carry updated beam management group configuration in the acceptance feedback information for the beam management group.

In some embodiments, the first base station, after receiving the beam management group information, may take over and maintain an original beam management group after a judgment according to a situation of the beam management group and a situation of the base station itself, therefore generates information for taking over and maintaining the beam management group, uses the information for taking over and maintaining the current beam management group as the acceptance feedback information for the beam management group, and then sends the acceptance feedback information for the beam management group to the current base station.

In some embodiments, the first base station, after receiving the beam management group information, may partially take over the beam management group after the judgment according to a situation of the beam management group and a situation of the base station itself, thus involving modifications and updates of members in the beam management group and management information. Relay devices in a first beam management group may be added or deleted, and updated relay device information is obtained. At least one item of the first beam management group information may be updated, and updated first beam management group information is obtained. Update information of the beam management group is then generated according to the updated relay device information and the updated first beam management group information. The beam management group update information is then used as the acceptance feedback information for the beam management group, and finally the acceptance feedback information for the beam management group is sent to the current base station.

In some embodiments, the first base station, after receiving the beam management group information, may partially take over the beam management group after the judgment according to the situation of the beam management group and the situation of the base station itself, but some relay devices in the beam management group need to be assigned to other beam management groups. In this case, the first base station may generate second beam management group information for these reassigned relay devices, and use the second beam management group information as acceptance feedback information for the beam management group and send the acceptance feedback information to these reassigned relay devices.

In some embodiments, the acceptance feedback information for the beam management group is carried in beam management group takeover signaling, and the first base station realizes transmission of the acceptance feedback information for the beam management group by sending the beam management group takeover signaling to the current base station.

It needs to be noted that the relay devices in the beam management group, when receiving the beam management group takeover signaling having an identifier of the first base station, may first retain beam management codebooks issued by the first base station without an update temporarily, but wait for at least one relay device to successfully access the first base station before making update.

In some embodiments, the current base station sends the acceptance feedback information for the beam management group to the relay devices in the beam management group, so that the relay devices can perform base station switching according to the acceptance feedback information for the beam management group.

In some embodiments, the current base station further sends the first base station outgoing beam configuration information of each relay device in the beam management group.

By the beam management method provided by the embodiment of the present application, transfer of the beam management group can be performed between the base stations by adjusting the members in the beam management group and beam configuration thereof in real time, which can ensure smooth switching of the relay devices in the beam management group between the base stations, ensure the communication quality, and improve the user experience.

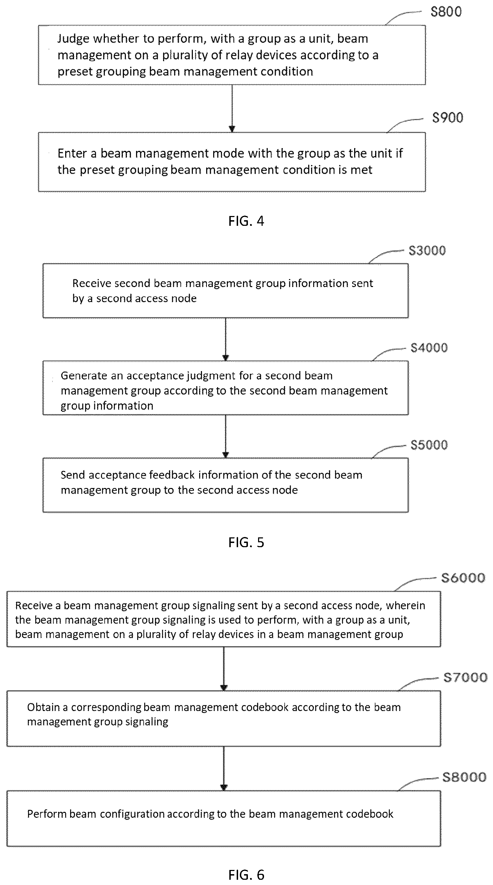

FIG. 4 is a flowchart of a beam management method provided by an embodiment of the present application. As shown in FIG. 4, the beam management method may include, but is not limited to, step S800 and step S900.

At step S800: whether to perform, with a group as a unit, beam management on a plurality of relay devices is judged according to a preset grouping beam management condition.

At step S900: a beam management mode with group as the unit is entered if the preset grouping beam management condition is met.

it needs to be noted that the preset grouping beam management condition at least includes one of the following: a beam management frequency required by at least one access relay device exceeds a first preset frequency threshold; a beam management codebook issue delay required by the at least one access relay device exceeds a preset time threshold; the number of the access relay devices exceeds a first preset number threshold; the number of first access relay devices exceeds a second preset number threshold, wherein the first relay devices are relay devices of which the required beam management frequency exceeds a second preset frequency threshold; the number of second access relay devices exceeds a third preset number threshold, wherein the second relay devices are relay devices of which the movement speed exceeds a preset speed threshold; the overhead of a beam management group signaling of the access relay devices exceeds a preset overhead threshold; or the number of third access relay devices exceeds a fourth preset number threshold, wherein the third relay devices are relay devices of which beam management correlation exceeds a preset correlation threshold.

In some embodiments, if the beam management frequency required by the access relay device exceeds the first preset frequency threshold, it indicates that the relay device has a higher requirement for the beam management frequency, and demands of the relay device for the beam management frequency cannot be achieved in accordance with a method for managing a beam in turn in some cases. At this time, it is necessary to adopt the beam management mode with group as the unit to ensure the quality of the beam management.

In some embodiments, if the beam management codebook issue delay required by the access relay device exceeds the preset time threshold, it indicates that real-time requirements of the relay device for acquisition of the beam management codebook cannot be achieved in accordance with the method for managing the beam in turn in some cases. At this time, it is necessary to adopt the beam management mode with group as the unit to ensure the quality of the beam management.

In some embodiments, if the number of the access relay devices exceeds the first preset number threshold, it indicates that at present, the number of the access relay devices is large, and demands of the relay devices for the beam management frequency cannot be achieved in accordance with the method for managing the beam in turn in the some cases. At this time, it is necessary to adopt the beam management mode with group as the unit to ensure the quality of the beam management.

In some embodiments, if there are a certain number of relay devices of which the required beam management frequency exceeds the second preset frequency threshold, and the number of these relay devices exceeds the second preset number threshold, it indicates that a significant number of relay devices have higher demands for the beam management frequency. At this time, it is necessary to adopt the beam management mode with group as the unit to ensure the quality of beam management.

In some embodiments, if there are a certain number of relay devices of which the movement speed exceeds the preset speed threshold, and the number of these relay devices exceeds the third preset number threshold, it indicates that a significant number of relay devices are in a movement state at a higher speed. At this time, it is necessary to adopt the beam management mode with group as the unit to ensure the quality of the beam management.

In some embodiments, if the overhead of the beam management group signaling of the access relay devices exceeds the preset overhead threshold, it indicates that the overhead is too high, resulting in high resource occupation, so that it is necessary to adopt the beam management mode with group as the unit to reduce the overhead.

In some embodiments, if there are a certain number of relay devices of which beam management correlation exceeds the preset correlation threshold, it indicates that a difference between beam management codebooks of these relay devices is larger, and it is not suitable to place these relay devices in a beam management group for management. At this time, these relay devices may be grouped into different groups for beam management according to the magnitude of the difference between beam management codebooks thereof.

It needs to be noted that the above preset grouping beam management condition may be in a form of a combination, for example, in some embodiments, the relay device cannot enter the beam management mode with group as the unit unless simultaneously meeting dual conditions that the required beam management codebook issue delay thereof exceeds the preset time threshold and that the overhead of the beam management group signaling exceeds the preset overhead threshold.

By the beam management method provided by the embodiment of the present application, different methods for managing a beam can be provided for different application scenarios or application demands by pre-judging whether to meet the requirements for entering into the beam management mode with group as the unit, and then performing the beam management with group as the unit when the requirements are met.

FIG. 5 is a flowchart of a beam management method provided by an embodiment of the present application. As shown in FIG. 5, the beam management method may include, but is not limited to, step S3000, step S4000, and step 5000.

At step S3000: second beam management group information sent by a second access node is received.

It needs to be noted that the second access node in this embodiment is a second base station.

In some embodiments, the second base station is a base station that is performing beam management on a beam management group, second beam management group information is management information for the beam management group, and a receiver of the second beam management group information is a base station that will take over the beam management group.

At step S4000: an acceptance judgment on a second beam management group is generated according to the second beam management group information.

At step S5000: acceptance feedback information for the second beam management group is sent to the second access node.

In some embodiments, the base station that will take over the beam management group will judge whether takeover of the beam management group is possible, update configuration of the beam management group according to a takeover situation, and send updated beam management group configuration to the current base station by carrying the updated beam management group configuration in the acceptance feedback information for the beam management group.

In some embodiments, the base station that will take over the beam management group, after receiving the beam management group information, may accept and maintain an original beam management group after a judgment according to a situation of the beam management group and a situation of the base station itself, therefore generates information for accepting and maintaining the beam management group, uses the information for taking over and maintaining the current beam management group as the acceptance feedback information for the beam management group, and then sends the acceptance feedback information for the beam management group to the current base station.

In some embodiments, the base station that will take over the beam management group, after receiving the beam management group information, may partially take over the beam management group after the judgment according to the situation of the beam management group and the situation of the base station itself, thus involving modifications and updates of members in the beam management group and management information. Relay devices in the second beam management group may be added or deleted, and updated relay device information is obtained. At least one item of the second beam management group information may be updated, and updated second beam management group information is obtained. Beam management group update information is then generated according to the updated relay device information and the updated second beam management group information. The beam management group update information is then used as the acceptance feedback information for the beam management group, and finally the acceptance feedback information for the beam management group is sent to the current base station.

In some embodiments, the base station that will take over the beam management group, after receiving the beam management group information, may partially take over the beam management group after the judgment according to the situation of the beam management group and the situation of the base station itself, but some relay devices in the beam management group need to be assigned to another beam management group to form a third beam management group. In this case, the base station that will take over the beam management group may generate third beam management group information for these reassigned relay devices, and use the third beam management group information as acceptance feedback information for the beam management group and send it to these reassigned relay devices through the second base station.

In some embodiments, the acceptance feedback information for the beam management group is carried in beam management group signaling, and the base station that will take over the beam management group realizes transmission of the acceptance feedback information for the beam management group by sending the beam management group signaling to the current base station.

FIG. 6 is a flowchart of a beam configuration method provided by an embodiment of the present application. As shown in FIG. 6, the beam management method may include, but is not limited to, step S6000, step S7000, and step 8000.

At step S6000: beam management group signaling sent by a second access node is received. The beam management group signaling is used to perform, with a group as a unit, beam management on a plurality of relay devices in a beam management group.

It needs to be noted that the second access node in this embodiment is a second base station.

In some embodiments, the relay devices receive the beam management group signaling sent by the second base station, and through the beam management group signaling, the second base station can perform, with group as the unit, beam management on the plurality of relay devices in the beam management group.

At step S7000: a corresponding beam management codebook is obtained according to the beam management group signaling.

At step S8000: beam configuration is performed according to the beam management codebook.

In some embodiments, by parsing the beam management group signaling, the relay device can obtain its own corresponding beam management codebook and perform beam configuration according to the beam management codebook.

In another embodiment, the relay devices in the beam management group are divided into a reference relay device and common relay devices other than the reference relay device, and only the reference relay device can directly obtain its own corresponding beam management codebook, and the beam management codebook is generated by the first base station. Whereas the common relay device can only generate a corresponding beam management codebook on its own according to the received beam management codebook corresponding to the reference relay device and a relative positional relation between the common relay device and the reference relay device, and perform beam configuration according to the beam management codebook.

In some embodiments, the common relay device may further send the generated beam management codebook to the second base station, and the second base station may then verify correctness of its generated beam management codebook.

In order to further elaborate the beam management method and the beam configuration method provided by the embodiments of the present application, the following examples are adopted for detailed description.

### Example 1:

Example 1 provides a group building process for a beam management group in a high-speed rail scenario. It needs to be noted that in the following example, a reconfigurable intelligent surface is selected as a relay device for exemplary illustration, and other relay devices, such as a network controlled repeater, may also be applied in the example of the present application.

In some cases, as a train travels, an incident angle of a beam emitted by a base station to each reconfigurable intelligent surface changes in real time. In order to ensure that an outgoing beam of the reconfigurable intelligent surface always stably covers a terminal in a target area without a shift in a coverage area, The base station 210 needs to respectively adjust beam relay configuration of each reconfigurable intelligent surface in real time according to a measurement result of a downlink channel by a terminal under the coverage of each reconfigurable intelligent surface, i.e., it is a beam control codebook of a reflection unit array on a panel of the reconfigurable intelligent surface. As a speed of the high-speed rail is up to more than 300 km/h, i.e. more than 83 m per second, a length of the whole high-speed rail is usually more than 200 m, the number of carriages is more than 10, on one side of each carriage, there are 7-9 windows and 13-17 rows of seats, a reconfigurable intelligent surface is deployed to each window, which covers 2 rows of seats, the number of the reconfigurable intelligent surfaces on one side of the whole high-speed rail may exceed 100, and they are all in a service area of one base station, and unified beam management is performed by one base station. In order to ensure a high traffic service, high-frequency coverage has been supported by 5G, whereas a high-frequency service beam of the base station is usually a narrow beam, which needs to cover interiors of the carriages in turn via relaying of each reconfigurable intelligent surface. Whereas, if the beam management is performed on each reconfigurable intelligent surface in turn, the larger the number of the reconfigurable intelligent surfaces, the larger a time interval of the beam management for each reconfigurable intelligent surface will be, which may result in non-timely beam management, thus affecting a coverage performance and affecting a communication quality.

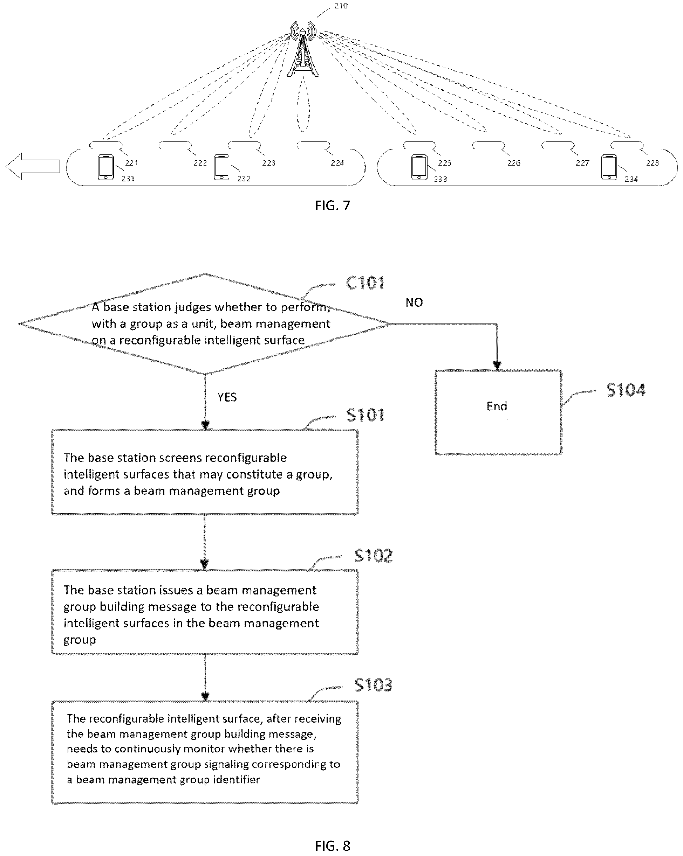

FIG. 7 is a schematic diagram of realizing signal coverage utilizing a reconfigurable intelligent surface in a high-speed rail scenario provided by an example of the present application. In the actual application scenario, there are a plurality of high-speed rail carriages, and a number of reconfigurable intelligent surfaces are deployed on each carriage, but in the figure of this example, only two carriages as well as four reconfigurable intelligent surfaces on each carriage are exemplarily drawn, and the reconfigurable intelligent surfaces are configured for signal coverage for user terminals in the carriages after refracting beams of the base station.

As shown in FIG. 7, a travel direction of the carriages is shown by an arrow, four reconfigurable intelligent surfaces 221-224 are deployed in a first carriage, four reconfigurable intelligent surfaces 225-228 are deployed in a second carriage, and the base station 210 is responsible for managing the above eight reconfigurable intelligent surfaces.

FIG. 8 is a schematic flowchart of a beam management method provided by an example of the present application. As shown in the figure, at least steps C101 as well as S101-S104 are included.

At step C101: a base station judges whether to perform, with a group as a unit, beam management on a reconfigurable intelligent surface.

Whether to enter a beam management mode with a group as a unit is judged based on one or more of the following preset grouping beam management conditions, and the preset grouping beam management conditions include the following.
(1) A beam management frequency required by at least one reconfigurable intelligent surface cannot be met.
(2) An update codebook issue delay required by at least one reconfigurable intelligent surface exceeds a predetermined limit.
(3) The number of dynamic reconfigurable intelligent surfaces accessing the base station exceeds a predetermined limit.
(4) Whether the number of reconfigurable intelligent surfaces of which the required beam management frequency exceeds a predetermined limit exceeds a predetermined number limit.
(5) The number of reconfigurable intelligent surfaces of which the movement speed exceeds a predetermined limit and which require dynamic beam management exceeds a predetermined number limit.
(6) Signaling overhead for beam management of the reconfigurable intelligent surfaces exceeds a predetermined limit.
(7) The number of reconfigurable intelligent surfaces of which beam management correlation exceeds a predetermined limit, and the beam management correlation refers to a correlation of a reflection unit array codebook.

It may be understood that the above statistics may be performed based on a predetermined time window length.

In this example, it is assumed that the number of reconfigurable intelligent surfaces required to be managed by the base station 210 exceeds a predetermined limit, i.e., the condition (3) is met, and therefore the beam management mode with group as the unit may be entered into.

It needs to be noted that in other examples, only one of the conditions may be adopted for a judgment, or a combination of several conditions may be adopted, e.g., a combination of (1) and (4), and a combination of (1) and (2).

At step S101: the base station screens reconfigurable intelligent surfaces that may constitute a group, and a beam management group is formed.

A screening condition is one or more of preset grouping conditions, and the preset grouping conditions include the following.
(1) The relative position between reconfigurable intelligent surfaces of the same group is fixed.
(2) Beam management frequencies required by reconfigurable intelligent surfaces of the same group of are equal or close.
(3) Reconfigurable intelligent surfaces of the same group have the same movement speed and movement direction.
(4) For a limitation on the number of member reconfigurable intelligent surfaces, if the base station has a limitation on a maximum or minimum number of members for group building, it is necessary to ensure that a scale of the group complies with the limitation.

It needs to be noted that the condition (1) may be a mandatory condition, and the others are optional conditions.

In this example, the reconfigurable intelligent surfaces 221-224 of the first carriage belong to the same carriage, the relative position therebetween is fixed, the reconfigurable intelligent surfaces 225-228 belong to the second carriage and are not in hard-connection to the first carriage, there is a displacement between the carriages when a rail is not straight, and therefore the reconfigurable intelligent surfaces 225-228 are not suitable to constitute a beam management group with the reconfigurable intelligent surfaces 221-224. The practice in this example is that the reconfigurable intelligent surfaces 221-224 constitute a beam management group A, and the reconfigurable intelligent surfaces 225-228 constitute a beam management group B, and so on for other carriages.

There may be several following ways for the base station to acquire work information of the reconfigurable intelligent surfaces.

The first one is that the base station measures positioning of the reconfigurable intelligent surfaces, and acquires at least one of the following according to the positioning: position information, the movement speed of the RISs, and the relative positional relation. The precision of this manner depends on the precision of a positioning solution.

The second one is that the base station acquires the work information from the reconfigurable intelligent surface, and the acquired information includes at least one of the following: position information of the reconfigurable intelligent surface, a movement speed of the reconfigurable intelligent surface, and whether the reconfigurable intelligent surface is fixed in a relative position relative to other adjacent reconfigurable intelligent surfaces. This manner requires the reconfigurable intelligent surface to measure its own position information and movement speed by itself, e.g., technologies such as BeiDou positioning and GPS positioning may be adopted, and results are reported to the base station.

The third one is that the base station acquires the work information from an operation management backend of the reconfigurable intelligent surfaces, the acquired information includes at least one of the following: a list of reconfigurable intelligent surfaces that may constitute a group; and whether a relative position among the reconfigurable intelligent surfaces in the same group is fixed, a relative positional relation among the reconfigurable intelligent surfaces in the same group, a movement speed of the reconfigurable intelligent surfaces, and outgoing beam configuration of the reconfigurable intelligent surfaces in the group, which are used to manage a target area covered by relay beams of the reconfigurable intelligent surfaces. The outgoing beam configuration of the reconfigurable intelligent surfaces in the group further includes at least one of the following: a horizontal outgoing angle of an outgoing beam relative to panels of the reconfigurable intelligent surfaces, a vertical outgoing angle of the outgoing beam relative to the panels of the RISs, a horizontal outgoing width (measured by an angle value) of the outgoing beam, a vertical outgoing width (measured by an angle value) of the outgoing beam, spacing from the panels of the reconfigurable intelligent surfaces to an outgoing beam coverage point, and a coverage area of the outgoing beam coverage point. The coverage area of the outgoing beam coverage point may be measured by radius or diameter. In this manner, a network deployer determines a strategy and parameters of the beam management group according to data measured in advance during the deployment of a reconfigurable intelligent surface project, and configures them to the base station through the backend.

The fourth manner is that the base station acquires the work information from an adjacent base station, the acquired information includes at least one of the following: a list of reconfigurable intelligent surfaces that may constitute a group in to-be-switched reconfigurable intelligent surfaces, a relative position value among the reconfigurable intelligent surfaces that may constitute a group in the to-be-switched reconfigurable intelligent surfaces, and a movement speed of the reconfigurable intelligent surfaces. It needs to be noted that if an adjacent base station has built a beam management group of the reconfigurable intelligent surfaces, parameters of the beam management group may be acquired from the adjacent base station for reference when the group of reconfigurable intelligent surfaces moves over from the adjacent base station.

The above relative positional relation includes at least one of the following: the linear spacing between common member reconfigurable intelligent surfaces and a reference point reconfigurable intelligent surface, or the linear spacing between adjacent reconfigurable intelligent surfaces; the horizontal spacing between the common member reconfigurable intelligent surfaces and the reference point reconfigurable intelligent surface and the height difference between the common member reconfigurable intelligent surfaces and the reference point reconfigurable intelligent surface, or the horizontal spacing between the adjacent reconfigurable intelligent surfaces and the height difference between the adjacent reconfigurable intelligent surfaces, a direction included angle between the common member reconfigurable intelligent surfaces and the reference point reconfigurable intelligent surface, or a direction included angle between the adjacent reconfigurable intelligent surfaces, including the included angle in horizontal plane direction and the included angle in the vertical plane direction.

At step S102: the base station issues a beam management group building message to the reconfigurable intelligent surfaces in the beam management group.

The base station issues the beam management group building message for each reconfigurable intelligent surface in a group, which may be done in the following two manners.

The first manner is that the base station updates beam management codebooks of all reconfigurable intelligent surfaces in the group and issues the beam management codebooks of all the reconfigurable intelligent surfaces to each reconfigurable intelligent surface. In such a manner, the beam management group information includes at least one of the following: an identifier of a beam management group, or whether to adopt a compression code of the serial number of beam management.

It may be understood that existing compression coding manners in some cases may be adopted, which is not repeated in the present application.

The second manner is that the base station only updates the beam management codebook of the reference point member reconfigurable intelligent surface, and issues the beam management codebook of the reference point member reconfigurable intelligent surface as well as a relative positional relation between the reference point member reconfigurable intelligent surface and the common member reconfigurable intelligent surface to each reconfigurable intelligent surface, so that the common member reconfigurable intelligent surface derives its own codebook according to the above information. In such a manner, the beam management group information includes at least one of the following: a beam management group identifier, a reference point RIS identity indication, a common member RIS identity indication, and a relative positional relation between each common member reconfigurable intelligent surface and the reference point member reconfigurable intelligent surface.

In this example, assuming that the second manner is adopted to perform configuration of the beam management codebooks, the base station 210 indicates that the reconfigurable intelligent surface 221 is a reference point member reconfigurable intelligent surface, and the reconfigurable intelligent surfaces 222-224 are common member reconfigurable intelligent surfaces, and the reconfigurable intelligent surfaces 222-224 need to derive their own codebooks according to the codebook of the reconfigurable intelligent surface 221.

At step S103: after receiving the beam management group building message, the reconfigurable intelligent surface needs to continuously monitor whether there is beam management group signaling corresponding to the beam management group identifier.

In this example, the reconfigurable intelligent surfaces 221-224 need to keep monitoring whether there is beam management group signaling corresponding to a beam management group A identifier, and the reconfigurable intelligent surfaces 225-228 need to keep monitoring whether there is beam management group signaling corresponding to a beam management group B identifier. If the base station 210 needs to modify beam management group information of a certain reconfigurable intelligent surface, an updated beam management group may be issued, and the reconfigurable intelligent surfaces always monitor and receive beam management group signaling in accordance with latest received beam management group information.

At step S104: end.

If step S104 is entered, it indicates that a current situation is not suitable for entering into a beam management mode with a group as the unit.

By the beam management method provided by this example, beam management efficiency of the base station for the reconfigurable intelligent surfaces can be improved, the communication quality is ensured, and the user experience is improved.

It needs to be noted that the beam management method provided by the example is also applicable to other scenarios of non-mobile reconfigurable intelligent surfaces, e.g., a reconfigurable intelligent surface or other wireless signal relay device is deployed on a facade window of a building to relay an external signal to the interior to realize signal coverage for the interior. Assuming that a reconfigurable intelligent surface is deployed outside a window of each room on each floor outside the building, hundreds of reconfigurable intelligent surfaces may be deployed in one direction of the building, and a relative positional relation among these reconfigurable intelligent surfaces is fixed, which is also suitable for beam management in groups, e.g., reconfigurable intelligent surfaces on one side of each floor may constitute a beam management group, and a method for building a group may refer to the example of the high-speed rail.

### Example 2:

Example 2 is based on the high-speed rail scenario of Example 1 and details a process of how a base station performs beam management on reconfigurable intelligent surfaces in a beam management group.

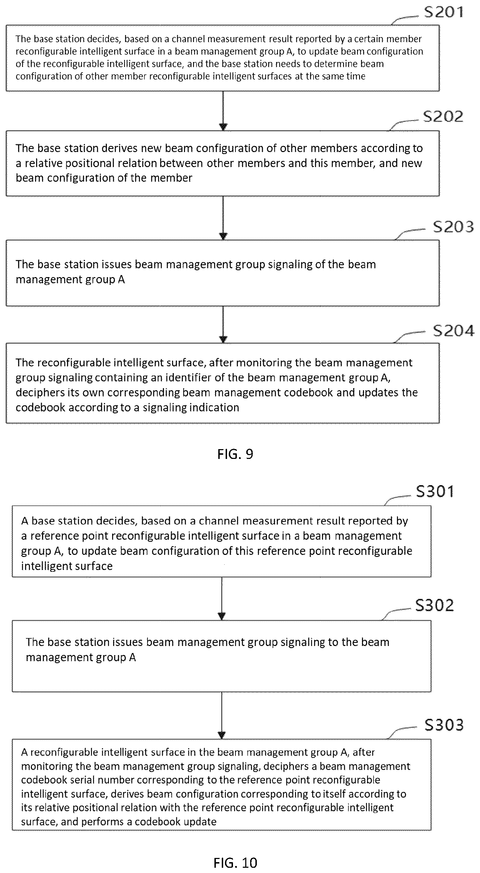

FIG. 9 is a schematic flowchart of a beam management method provided by an example of the present application. As shown in the figure, at least steps S201-S204 are included.

At step S201: The base station decides, based on a channel measurement result reported by a certain member reconfigurable intelligent surface in a beam management group A, to update beam configuration of this reconfigurable intelligent surface, and the base station needs to determine beam configuration of the other member reconfigurable intelligent surfaces at the same time.

In this example, it is assumed that the reconfigurable intelligent surface 221 is a member that requires an active update of beam configuration, and the reconfigurable intelligent surfaces 222-224 are members that require a passive update of beam configuration.

At step S202: the base station derives new beam configuration of other members according to a relative positional relation between other members and this member, and new beam configuration of this member.

In this example, it is necessary to obtain the relative positional relation between the reconfigurable intelligent surface 221 and the reconfigurable intelligent surfaces 222-224, and the base station first generates the beam management codebook of the reconfigurable intelligent surface 221, and then derives the beam management codebooks of the reconfigurable intelligent surfaces 222-224 according to the relative positional relation.

At step S203: the base station issues beam management group signaling of the beam management group A.

A control link for issuing the signaling may use a wide beam, such as a low-frequency carrier wide beam, or a high-frequency carrier wide beam, that can cover the reconfigurable intelligent surfaces 221-224 simultaneously, to ensure that the reconfigurable intelligent surfaces 221-224 can receive the beam management group signaling simultaneously. The beam management group signaling contains one or more of the following: an identifier of the beam management group A; a beam management codebook serial number of each member reconfigurable intelligent surface, wherein if it is agreed upon, at the time of group building, to adopt compression codes for the beam management codebook serial numbers of all the member reconfigurable intelligent surfaces, the compressed beam management codebook serial numbers of all the member reconfigurable intelligent surfaces are transmitted; a base station identifier, i.e., indicating which base station generates the beam management group signaling; a codebook update sequence of each member reconfigurable intelligent surface, i.e., indicating which of the reconfigurable intelligent surfaces 221-224 is updated first, and which is updated later, wherein if this item is not included, each member reconfigurable intelligent surface may decide update time on its own, e.g., updating the codebook immediately after receiving the beam management group signaling; and a codebook update time offset of each member reconfigurable intelligent surface, i.e., indicating relative time for the reconfigurable intelligent surfaces 221-224 to update the codebooks.

It needs to be noted that the three pieces of information, namely, the base station identifier, the codebook update sequence of each member reconfigurable intelligent surface, and the codebook update time offset of each member reconfigurable intelligent surface, are optional information and may or may not be contained in the beam management group signaling.

At step S204: the reconfigurable intelligent surface, after monitoring the beam management group signaling containing the identifier of the beam management group A, deciphers its own corresponding beam management codebook and updates the codebook according to a signaling indication.

### Example 3:

Example 3 is based on the high-speed rail scenario of Example 1 and details a process of how a base station performs beam management on reconfigurable intelligent surfaces in a beam management group.

FIG. 10 is a schematic flowchart of a beam management method provided by an example of the present application. As shown in the figure, at least steps S301-S303 are included.

At step S301: The base station decides, based on a channel measurement result reported by a reference point reconfigurable intelligent surface in the beam management group A, to update the beam configuration of the reference point reconfigurable intelligent surface.

In this example, it is assumed that the reconfigurable intelligent surface 221 is a reference point reconfigurable intelligent surface, and the reconfigurable intelligent surfaces 222-224 are common reconfigurable intelligent surfaces.

At step S302: the base station issues beam management group signaling to the beam management group A.

In this example, a control link for issuing the signaling may refer to Example 2. The beam management group signaling contains one or more of the following: an identifier of the beam management group A, a beam management codebook serial number of the reconfigurable intelligent surface 221; a base station identifier, i.e., indicating which base station generates the beam management group signaling; a relative positional relation between the reconfigurable intelligent surfaces 222-224 and the reconfigurable intelligent surface 221; a codebook update sequence of the reconfigurable intelligent surfaces 221-224; and a codebook update time offset of the reconfigurable intelligent surfaces 221-224, i.e., indicating relative time for the reconfigurable intelligent surfaces 221-224 to update the codebooks.

It needs to be noted that the four pieces of information, namely, the base station identifier, the relative positional relation between the reconfigurable intelligent surfaces 222-224 and the reconfigurable intelligent surface 221, the codebook update sequence of each member reconfigurable intelligent surface, and the codebook update time offset of each member reconfigurable intelligent surface, are optional information and may or may not be contained in the beam management group signaling.

At step S303: the reconfigurable intelligent surface in the beam management group A, after monitoring the beam management group signaling, deciphers the beam management codebook serial number corresponding to the reference point reconfigurable intelligent surface, derives the beam configuration corresponding to itself according to its relative positional relation with the reference point reconfigurable intelligent surface, and performs a codebook update.

### Example 4:

Example 4 is based on the high-speed rail scenario of Example 1 and details a process a process in which the base station performs beam management during switching when the high-speed rail is moving.

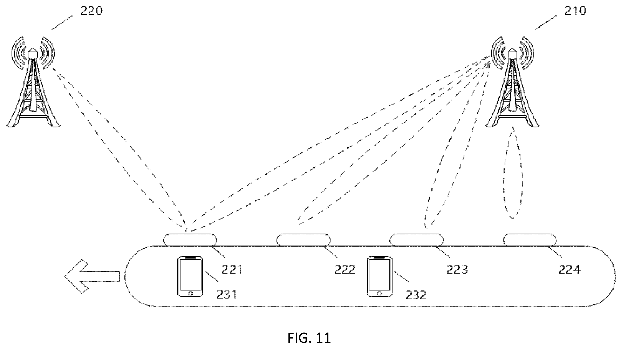

FIG. 11 is a schematic diagram of beam management in a base station switching process in a high-speed rail scenario provided by an example of the present application. As shown in the figure, a process of beam management in a process in which a beam management group consisting of a group of reconfigurable intelligent surfaces moves from a cell covered by a base station 210 to a cell covered by a base station 220 during a travel of the high-speed rail is demonstrated.

In this example, assuming that the reconfigurable intelligent surfaces 221-224 are deployed on the same carriage on the high-speed train and the reconfigurable intelligent surfaces 221-224 have built a beam management group A by the base station 210 in a coverage area of the base station 210, when the train moves from the base station 210 to an edge of a coverage area of the base station 220, the reconfigurable intelligent surface 221 firstly measures a reference signal of the base station 220 and reports a measurement report to the base station 210.

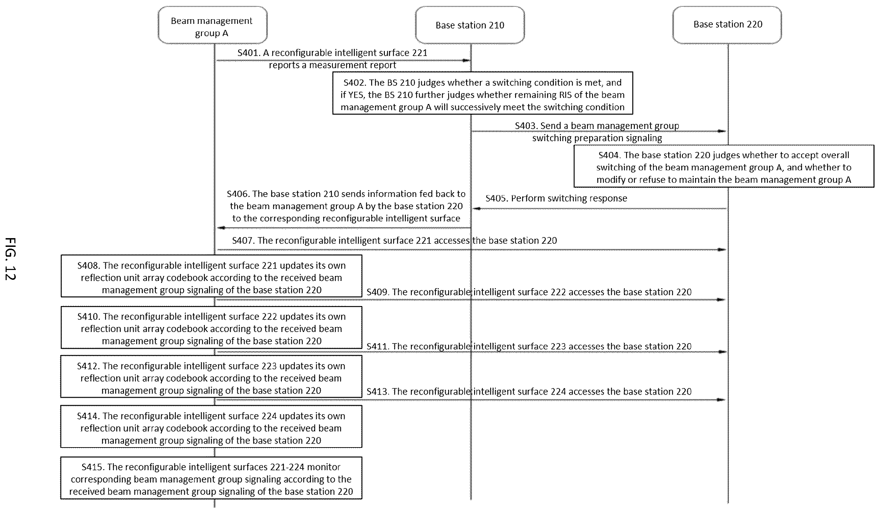

FIG. 12 is a flowchart of beam management in a base station switching process provided by an example of the present application. As shown in the figure, at least steps S401-S415 are included.

At step S401: the reconfigurable intelligent surface 221 reports the measurement report.

In this example, based on a travelling direction of the train, the reconfigurable intelligent surface 221 is the first to require base station switching, and therefore it reports the measurement report.

At step S402: the base station 210 judges whether a switching condition is met, and if it is met, the base station 210 further judges whether remaining reconfigurable intelligent surfaces of the beam management group A will successively meet the switching condition.

In this example, the base station 210 judges whether the reconfigurable intelligent surface 221 meets the switching condition according to the measurement report of the reconfigurable intelligent surface 221, and if it meets the switching condition, the base station 210 further judges whether the remaining reconfigurable intelligent surfaces 222-224 of the beam management group A will successively meet the switching condition. The base station 210 may determine whether the reconfigurable intelligent surfaces 222-224 will also meet the switching condition successively along with the reconfigurable intelligent surface 221 according to the direction of a railroad, a change trend of a beam incident angle of the reconfigurable intelligent surface 221, a change of a road loss of the reconfigurable intelligent surface 221, or positioning information of the reconfigurable intelligent surface 221, and other manners.

It needs to be noted that the base station 210 may also predict in which time window switching of the reconfigurable intelligent surfaces 222-224 in the beam management group A will occur according to a change of the position information of the reference point reconfigurable intelligent surface or any one reconfigurable intelligent surface in the beam management group A. Since the movement direction of the high-speed rail is stable, the precision of this prediction is higher. If the time window for the switching to occur is about to arrive within predetermined time, for example, a predetermined time threshold may be set to 0.5 s, or 1 s, etc., the base station 210 may initiate a switching preparation of the reconfigurable intelligent surfaces 222-224 to the base station 220 in advance without receiving any measurement report of the reconfigurable intelligent surfaces 222-224.

At step S403: a beam management group switching preparation signaling is sent.

In this example, if the base station 210, after a judgment, considers that the switching condition is met, the base station 210 may initiate group switching preparation signaling to the base station 220. The signaling carries group information of the beam management group A, identifiers of the reconfigurable intelligent surfaces 221-224 contained in the beam management group A, and outgoing beam configuration of each reconfigurable intelligent surface in the beam management group A.

At step S404: the base station 220 judges whether to accept overall switching of the beam management group A, and whether to modify or refuse to maintain the beam management group A.

At step S405: a switching response is performed.

In this example, the base station 220 feeds a judgment result back to the base station 210. The feedback information includes at least one or more of the following.
(1) Whether to accept the overall switching of the beam management group. If the overall switching is refused, only the switching of the reconfigurable intelligent surface 221 may be accepted, and switching of the reconfigurable intelligent surfaces 222-224 is refused in the feedback to the base station 210. If the overall switching is accepted, switching signaling is fed back to the reconfigurable intelligent surfaces 221-224.
(2) Whether to accept and maintain the beam management group, i.e., whether to accept the group configuration of the beam management group A. If not, the base station 220 may modify the group configuration of the beam management group A and then feed it back to the base station 210. The modification includes: the member reconfigurable intelligent surfaces are added or deleted; and one or more items of group information are modified, e.g., modifying configuration of the compression code that adopts the beam management codebook serial number or replacing the reference point reconfigurable intelligent surface.
(3) The base station 220 may also change a certain member reconfigurable intelligent surface of the beam management group A to another beam management group, such as a beam management group C, and send group information of the beam management group C to this member reconfigurable intelligent surface through the base station 210.
(4) The base station 220 may send beam management group signaling to the beam management group A in advance.

At step S406: the base station 210 sends the information fed back to the beam management group A by the base station 220 to the corresponding reconfigurable intelligent surface.

In this example, the base station 210 sends the information fed back to the beam management group A by the base station 220 to the corresponding reconfigurable intelligent surface, and the reconfigurable intelligent surface retains a reflection unit array codebook issued by the base station 220 without an update temporarily.

At step S407: the reconfigurable intelligent surface 221 accesses the base station 220.

At step S408: the reconfigurable intelligent surface 221 updates its own reflection unit array codebook according to the received beam management group signaling of the base station 220.

In this example, if the reconfigurable intelligent surface 221 successfully accesses the base station 220, it updates its own reflection unit array codebook according to the received beam management group signaling of the base station 220.

At step S409: the reconfigurable intelligent surface 222 accesses the base station 220.

At step S410: the reconfigurable intelligent surface 222 updates its own reflection unit array codebook according to the received beam management group signaling of the base station 220.

At step S411: the reconfigurable intelligent surface 223 accesses the base station 220.

At step S412: the reconfigurable intelligent surface 223 updates its own reflection unit array codebook according to the received beam management group signaling of the base station 220.

At step S413: the reconfigurable intelligent surface 224 accesses the base station 220.

At step S414: the reconfigurable intelligent surface 224 updates its own reflection unit array codebook according to the received beam management group signaling of the base station 220.

At step S415: the reconfigurable intelligent surfaces 221-224 monitor corresponding beam management group signaling according to the received beam management group signaling of the base station 220.

The beam management method provided by this example can ensure smooth switching of the base station, ensure the communication quality, and improve the user experience by adjusting the members in the beam management group and their beam configuration in real time.

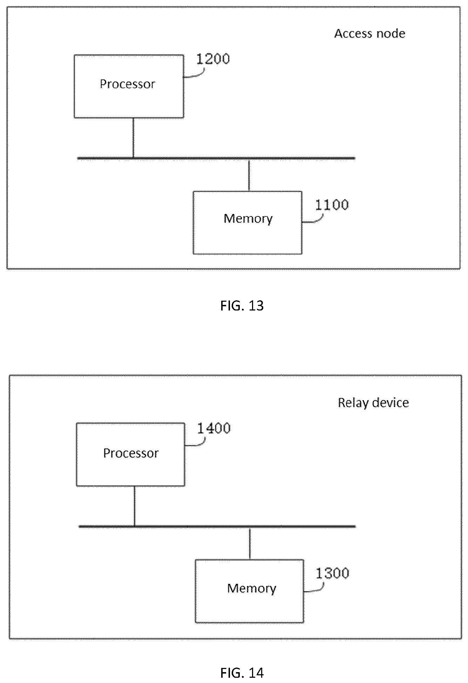

FIG. 13 is a schematic structural diagram of an access node provided by an embodiment of the present application. As shown in FIG. 13, the access node 100 includes a memory 1100 and a processor 1200. The number of the memory 1100 and the processor 1200 may be one or more, with one memory 1100 and one processor 1200 as an example in FIG. 13. The memory 1100 and the processor 1200 in the device may be connected via a bus or other means, and the connection via the bus is taken as an example in FIG. 13.

The memory 1100, as a computer readable storage medium, may be configured to store a software program, a computer executable program and a module, such as a program instruction/module corresponding to a method for determining resources provided by any embodiment of the present application. The processor 1200 implements the above beam management method by running the software program, instruction and module stored in the memory 1100.

The memory 1100 may mainly include a storage program area and a storage data area, wherein the storage program area may store an operating system, and an application program required by at least one function. In addition, the memory 1100 may include a high-speed random access memory, and may further include a non-volatile memory, such as at least one disk memory device, a flash memory device, or other non-volatile solid state memory devices. In some examples, the memory 1100 may further include memories remotely arranged relative to the processor 1200, and these remote memories may be connected to the device via a network. Examples of the above network include, but are not limited to, the Internet, corporate intranets, local area networks, mobile communication networks, and combinations thereof.

FIG. 14 is a schematic structural diagram of a relay device provided by an embodiment of the present application. As shown in FIG. 14, the device includes a memory 1300 and a processor 1400. The number of the memory 1300 and the processor 1400 may be one or more, with one memory 1300 and one processor 1400 as an example in FIG. 14. The memory 1300 and the processor 1400 in the device may be connected via a bus or other means, and the connection via the bus is taken as an example in FIG. 14.

The memory 1300, as a computer readable storage medium, may be configured to store a software program, a computer executable program and a module, such as a program instruction/module corresponding to a method for determining resources provided by any embodiment of the present application. The processor 1400 implements the above beam configuration method by running the software program, instruction and module stored in the memory 1300.

The memory 1300 may include a storage program area and a storage data area, wherein the storage program area may store an operating system, and an application program required by at least one function. In addition, the memory 1300 may include a high-speed random access memory, and may further include a non-volatile memory, such as at least one disk memory device, a flash memory device, or other non-volatile solid state memory device. In some examples, the memory 1300 may further includes memories remotely arranged relative to the processor 1400, and these remote memories may be connected to the device via a network. Examples of the above network include, but are not limited to, the Internet, corporate intranets, local area networks, mobile communication networks, and combinations thereof.

An embodiment of the present application further provides a computer readable storage medium, storing a computer executable instruction. The computer executable instruction is used to execute the beam management method or the beam configuration method as provided by any embodiment of the present application.

An embodiment of the present application further provides a computer program product, including a computer program or a computer instruction, and the computer program or the computer instruction is stored in a computer readable storage medium. A processor of a computer device reads the computer program or computer instruction from the computer readable storage medium, and the processor executes the computer program or computer instruction, so that the computer device executes the beam management method or the beam configuration method provided by any embodiment of the present application.

According to the beam management method, the beam configuration method, the access node, the relay device, and the storage medium provided by the embodiments of the present application, in the beam management method, the plurality of relay devices are grouped according to the preset grouping rule, and beam management groups are formed. With each group as a unit, the beam management is performed on the relay devices in each beam management group, thus improving beam management efficiency and ensuring a communication quality.

The system architecture and application scenarios described in the embodiments of the present application are intended to more clearly illustrate the technical solutions of the embodiments of the present application, and do not constitute a limitation on the technical solutions provided by the embodiments of the present application. It is known to those skilled in the art that with the evolution of the system architecture and the emergence of new application scenarios, the technical solutions provided by the embodiments of the present application are also applicable to similar technical problems.

It may be understood by those ordinarily skilled in the art that all or some of the steps in the methods disclosed above, systems, and functional modules/units in the device may be implemented as software, firmware, hardware, and appropriate combinations thereof.

In a hardware implementation, the division between functional modules/units referred to in the above description does not necessarily correspond to a division of physical components; for example, a physical component may have a plurality of functions, or a function or step may be cooperatively executed by a plurality of physical components. Some or all of the physical components may be implemented as software executed by a processor, such as a central processor, a digital signal processor, or a microprocessor, or implemented as hardware, or implemented as an integrated circuit, such as a specialized integrated circuit. Such software may be distributed on a computer readable medium, and the computer readable medium may include a computer storage medium (or non-transitory medium) and a communication medium (or transitory medium). As is well known to those of ordinary skill in the art, the term computer storage medium includes volatile and non-volatile, removable and non-removable media implemented in any method or technology for storing information (such as a computer readable instruction, a data structure, a program module, or other data). The computer storage medium includes, but is not limited to, a RAM, a ROM, an EEPROM, a flash memory or other memory technologies, a CD-ROM, a digital versatile disk (DVD) or other optical disk storage, a magnetic cartridge, a magnetic tape, magnetic disk storage, or other magnetic storage apparatuses, or any other medium that may be used to store desired information and that may be accessed by a computer. In addition, it is well known to those of ordinary skill in the art that the communication medium typically contains a computer readable instruction, a data structure, a program module, or other data in a modulated data signal such as a carrier wave or other transmission mechanisms, and may include any information delivery medium.

Terms "part", "module", "system", etc., used in this specification are used to represent computer-related entities, hardware, firmware, combinations of hardware and software, software, or software in execution. For example, a part may be, but is not limited to, a process, a processor, an object, an executable file, a thread of execution, a program, or a computer running on a processor. By way of illustration, both an application running on a computing device and the computing device may be parts. One or more parts may reside in a process or thread of execution, and the parts may be located on a computer or distributed between two or more computers. In addition, these parts may be executed from various computer readable media storing various data structures thereon. A part may, for example, be in communication via a local or remote process according to a signal having one or more packets of data (e.g., data from two parts that interact with another part from a local system, a distributed system, or an inter-network, such as the Internet interacting with other systems via signals).

## Claims

1. A beam management method, comprising:
grouping a plurality of relay devices according to a preset grouping rule, and forming at least one beam management group; and
performing, with each group as a unit, beam management on the relay devices in each beam management group.

2. The beam management method according to claim 1, wherein grouping the plurality of relay devices according to the preset grouping rule, and forming at least one beam management group comprises:
acquiring the preset grouping rule, and work information of the plurality of relay devices;
determining the relay device corresponding to the work information which meets the preset grouping rule as a target relay device; and
determining the beam management group according to the target relay device.

3. The beam management method according to claim 1, wherein performing, with each group as the unit, beam management on the relay devices in each beam management group comprises:
generating at least one beam management group signaling; and
sending the corresponding beam management group signaling to the beam management group, and performing beam management on the relay devices in the beam management group.

4. The beam management method according to claim 1, wherein grouping the plurality of relay devices, and forming at least one beam management group comprises:
sending a beam management group building message to the plurality of relay devices, so that the plurality of relay devices form the beam management group according to the beam management group building message; wherein the beam management group building message carries beam management group information.

5. The beam management method according to claim 4, wherein the beam management group information at least comprises one of the following:
an identifier of a beam management group;
a transmission type of a serial number of a beam management codebook;
an identifier of a reference relay device;
an identifier of a common relay device; or
a relative positional relation between a reference relay device and a common relay device.

6. The beam management method according to claim 3, wherein generating at least one beam management group signaling comprises:
configuring a corresponding beam management codebook for each the relay device in the beam management group; and
generating at least one beam management group signaling according to all the beam management codebooks.

7. The beam management method according to claim 3, wherein the beam management group signaling at least comprises one of the following:
an identifier of a beam management group;
an identifier of an access node;
a serial number of a beam management codebook of each relay device in a beam management group;
a compression code of a serial number of a beam management codebook of each relay device in a beam management group;
an update sequence of a beam management codebook of each relay device in a beam management group; or
an update time offset of a beam management codebook of each relay device in a beam management group.

8. The beam management method according to claim 3, wherein generating at least one beam management group signaling comprises:
configuring a corresponding beam management codebook for a reference relay device in the beam management group;
acquiring a relative positional relation between the reference relay device and a common relay device; and
generating at least one beam management group signaling according to the beam management codebook, and the relative positional relation between the reference relay device and the common relay device.

9. The beam management method according to claim 3, wherein the beam management group signaling at least comprises one of the following:
an identifier of a beam management group;
an identifier of an access node;
a serial number of a beam management codebook of a reference relay device in a beam management group;
a relative positional relation between a reference relay device and a common relay device in a beam management group;
an update sequence of a beam management codebook of each common relay device in a beam management group; or
an update time offset of a beam management codebook of each common relay device in a beam management group.

10. The beam management method according to claim 8, wherein performing, with group as the unit, beam management on the relay devices in the beam management group comprises:
receiving device feedback information of the common relay device in the beam management group, wherein the device feedback information carries a beam management codebook generated by the common relay device; and
verifying, according to a relay performance of the common relay device and the device feedback information, the generated beam management codebook.

11. The beam management method according to claim 1, further comprising:
sending, upon the condition that a preset trigger condition for access node switching is met, beam management group information to a first access node; and
receiving acceptance feedback information of the beam management group sent by the first access node.

12. The beam management method according to claim 11, wherein the preset trigger condition for access node switching at least comprises one of the following:
at least one relay device in the beam management group meets an access node switching condition; or
change of position information of relay devices in the beam management group meets an access node switching condition within a preset time window.

13. The beam management method according to claim 11, wherein the beam management group information comprises an identifier of each relay device in the beam management group.

14. The beam management method according to claim 11, further comprising:
sending the first access node outgoing beam configuration information of each relay device in the beam management group.

15. The beam management method according to claim 11, further comprising:
sending the acceptance feedback information to the relay device in the beam management group, so that the relay device is able to switch an access node according to the acceptance feedback information.

16. The beam management method according to claim 1, wherein the preset grouping rule at least comprises one of the following:
a relative position between the plurality of access relay devices which are accessed is fixed;
a beam management frequency difference between the plurality of relay devices which are accessed is less than a preset frequency difference threshold;
the plurality of relay devices which are accessed have the same movement speed and movement direction; or
a number of the relay devices which are accessed is less than a preset number threshold of members of the beam management group.

17. The beam management method according to claim 1, further comprising:
judging, according to a preset grouping beam management condition, whether to perform, with group as the unit, beam management on the plurality of relay devices; and
entering, in response to that the preset grouping beam management condition is met, a beam management mode with group as the unit.

18. The beam management method according to claim 17, wherein the preset grouping beam management condition at least comprises one of the following:
a beam management frequency required by the at least one relay device which is accessed exceeds a first preset frequency threshold;
a beam management codebook issue delay required by the at least one relay device which is accessed exceeds a preset time threshold;
a number of the relay devices which are accessed exceeds a first preset number threshold;
a number of first relay devices which are accessed exceeds a second preset number threshold, wherein the first relay devices are relay devices of which a required beam management frequency exceeds a second preset frequency threshold;
a number of second relay devices which are accessed exceeds a third preset number threshold, wherein the second relay devices are relay devices of which a movement speed exceeds a preset speed threshold;
overhead of beam management group signaling of the relay devices which are accessed exceeds a preset overhead threshold; or
a number of third relay devices which are accessed exceeds a fourth preset number threshold, wherein the third relay devices are relay devices of which beam management correlation exceeds a preset correlation threshold.

19. The beam management method according to claim 2, wherein acquiring the work information of the plurality of relay devices at least comprises one of the following:
measuring positions of the relay devices, and obtaining the work information according to the positions;
acquiring the work information from the relay devices;
acquiring the work information of the relay devices from a management server of the relay devices; or
acquiring the work information of the relay devices from an adjacent access node.

20. The beam management method according to claim 19, wherein upon the condition of measuring the positions of the relay devices, and obtaining the work information according to the positions, the work information at least comprises one of the following:
position information;
a movement speed; or
a relative positional relation between the relay devices in the beam management group.

21. The beam management method according to claim 19, wherein upon the condition of acquiring the work information from the relay devices, the work information at least comprises one of the following:
position information;
a movement speed; or
a determination result of relative positional fixity of the relay device relative to an adjacent relay device.

22. The beam management method according to claim 19, wherein upon the condition of acquiring the work information of the relay devices from the management server of the relay devices, the work information at least comprises one of the following:
a movement speed;
an identifier of the relay device in the beam management group;
a determination result of relative positional fixity between the relay devices in the beam management group;
a relative positional relation between the relay devices in the beam management group; or
beam configuration information of the relay devices in the beam management group.

23. The beam management method according to claim 22, wherein the beam configuration information at least comprises one of the following:
a horizontal outgoing angle of an outgoing beam relative to a relay device;
a vertical outgoing angle of an outgoing beam relative to a relay device;
a horizontal outgoing width of an outgoing beam;
a vertical outgoing width of an outgoing beam;
a spacing between a relay device and an outgoing beam coverage point; or
a coverage area of an outgoing beam coverage point.

24. The beam management method according to any one of claims 20, 22 and 23, wherein the beam management group comprises at least one reference relay device and a common relay device other than the reference relay device; and
the relative positional relation at least comprises one of the following:
a linear spacing between the reference relay device and the common relay device;
a linear spacing between adjacent relay devices;
a horizontal spacing between the reference relay device and the common relay device and a height difference between the reference relay device and the common relay device;
a horizontal spacing between the adjacent relay devices and a height difference between the adjacent relay devices;
an included angle between the reference relay device and the common relay device in a horizontal plane direction and an included angle between the reference relay device and the common relay device in a vertical plane direction; or
an included angle between the adjacent relay devices in a horizontal plane direction and an included angle between the adjacent relay devices in a vertical plane direction.

25. A beam configuration method, comprising:
receiving a beam management group signaling sent by a second access node, wherein the beam management group signaling is used to perform, with a group as a unit, beam management on a plurality of relay devices in a beam management group;
obtaining a corresponding beam management codebook according to the beam management group signaling; and
performing beam configuration according to the beam management codebook.

26. The beam configuration method according to claim 25, wherein the beam management group comprises at least one reference relay device and a common relay device other than the reference relay device, and the beam management group signaling at least comprises a beam management codebook corresponding to the reference relay device, and a relative positional relation between the common relay device and the reference relay device; and
obtaining the corresponding beam management codebook according to the beam management group signaling comprises:
generating a beam management codebook corresponding to the common relay device according to the relative positional relation and the beam management codebook corresponding to the reference relay device.

27. The beam configuration method according to claim 26, further comprising:
sending the second access node the beam management codebook corresponding to the common relay device, so that the second access node is able to verify whether the beam management codebook corresponding to the common relay device is correct.

28. A beam management method, comprising:
receiving second beam management group information sent by a second access node; and
generating an acceptance judgment for a second beam management group according to the second beam management group information, and sending acceptance feedback information of the second beam management group to the second access node.

29. The beam management method according to claim 28, wherein generating the acceptance judgment for the second beam management group comprises:
whether to accept and maintain the second beam management group.

30. The beam management method according to claim 28, wherein generating the acceptance judgment for the second beam management group, and sending the acceptance feedback information of the second beam management group to the second access node comprises:
adding or deleting relay devices in the second beam management group, and obtaining updated relay device information;
updating at least one item of the second beam management group information, and obtaining updated second beam management group information; and
generating the acceptance feedback information of the second beam management group according to the updated relay device information and the updated second beam management group information.

31. The beam management method according to claim 28, wherein generating the acceptance judgment for the second beam management group, and sending the acceptance feedback information of the second beam management group to the second access node comprises:
reassigning part of relay devices in the second beam management group to a third beam management group, generating third beam management group information, and sending the third beam management group information to the second access node.

32. The beam management method according to claim 28, further comprising:
sending a second beam management group signaling for the second beam management group to the second access node.

33. The beam management method according to claim 31, further comprising:
sending a third beam management group signaling for the third beam management group to the second access node.

34. An access node, comprising:
at least one processor; and
at least one memory, configured to store at least one program; wherein
the at least one program executes, when run by the at least one processor, the beam management method according to any one of claims 1 to 24, and 28 to 33.

35. A relay device, comprising:
at least one processor; and
at least one memory, configured to store at least one program; wherein
the at least one program executes, when run by the at least one processor, the beam configuration method according to any one of claims 25 to 27.

36. A computer readable storage medium, storing a processor executable program therein, wherein the processor executable program executes, when run by a processor, the beam management method according to any one of claims 1 to 24, and 28 to 33, or, the beam configuration method according to any one of claims 25 to 27.
